# EUROPÄISCHE PATENTANMELDUNG

(11) **EP 4 810 228 A1**
(43) Veröffentlichungstag der Anmeldung: **23.09.2026**
(21) Anmeldenummer: 26158972.5
(22) Anmeldetag: 17.02.2026
(51) Int. Cl.: B29C 53/30, B29C 57/00

(54) **VORRICHTUNG UND VERFAHREN ZUR HERSTELLUNG EINER FOLIENSCHLAUCHABDECKUNG FÜR MEDIZINISCHE VORRICHTUNGEN**

(30) Priorität: 19.03.2025 DE 102025110621
(71) Anmelder: Udo Heisig GmbH, 85640 Putzbrunn (DE)
(72) Erfinder: Ungar, Jens, 85521 Ottobrunn (DE); Plitz, Florian, 85521 Ottobrunn (DE)
(74) Vertreter: Staeger & Sperling Partnerschaftsgesellschaft mbB

(57) **Zusammenfassung**

Die Erfindung betrifft ein Verfahren und eine Vorrichtung zur Herstellung einer Folienschlauchabdeckung für medizinische Vorrichtungen, mit einem durch eine teleskopartige Steckfaltung in seiner Länge verkürzten und bei bestimmungsgemäßen Gebrauch ausziehbaren Folienschlauch, umfassend
eine Spreizvorrichtung (1) zum Spreizen zumindest eines Endabschnitts eines Folienschlauchs (100) in einer Querrichtung der Vorrichtung (10), wobei die Spreizvorrichtung (1) an einem Linearantrieb (12) zur Bewegung der Spreizvorrichtung (1) entlang einer Längsrichtung der Vorrichtung (10) angeordnet ist, und
eine Spreiz- und Klemmvorrichtung (2) zum Spreizen und Klemmen des Folienschlauchs (100) in einer zur Längsrichtung, und vorzugsweise zur Querrichtung, orthogonalen Richtung,
wobei ein jeweiliger vorbestimmter Abschnitt des Folienschlauchs (100) mittels der Spreizvorrichtung (1) an der Spreiz- und Klemmvorrichtung (2) durch eine Bewegung der Spreizvorrichtung (1) mittels des Linearantriebs (12) umschlagbar ist, wobei der umgeschlagene vorbestimmte Abschnitt mittels der Spreiz- und Klemmvorrichtung (2) spreizbar ist, derart, dass eine Faltung der teleskopartigen Steckfaltung des Folienschlauchs (100) ausbildbar ist.

## Beschreibung

Die Erfindung betrifft ein Verfahren und eine Vorrichtung zur Herstellung einer Folienschlauchabdeckung für medizinische Vorrichtungen, mit einem durch eine teleskopartige Steckfaltung in seiner Länge verkürzten und bei bestimmungsgemäßen Gebrauch ausziehbaren Folienschlauch.

Aus dem Stand der Technik ist eine Vielzahl von Vorrichtungen zur Herstellung einer Folienschlauchabdeckung für medizinische Vorrichtungen bekannt. Diese Vorrichtungen erfordern jedoch ein manuelles bzw. händisches Herstellen der teleskopartigen Steckfaltung an einem Formwerkzeug, beispielsweise an einem zylindrischen Dorn oder Rohr.

Die manuelle Herstellung von Folienschlauchabdeckungen ist mit einer Reihe von Nachteilen verbunden, welche sowohl die Effizienz als auch die Qualität beeinträchtigen. Der manuelle Prozess erfordert zunächst einen hohen Zeit- und Arbeitsaufwand. Zudem besteht ein erhöhtes Risiko für Fertigungsfehler, wie etwa fehlerhafte Faltungen oder ungleichmäßige Materialanordnungen, die zu einer unzureichenden Passform und eingeschränkten Funktionalität führen. Solche Unregelmäßigkeiten beeinträchtigen die zuverlässige Verwendung der Abdeckungen und sind insbesondere bei medizinischen Anwendungen problematisch.

Der Erfindung liegt deshalb die Aufgabe zugrunde, die vorgenannten Nachteile zu überwinden und eine Vorrichtung und ein Verfahren zur Herstellung einer Folienschlauchabdeckung für medizinische Vorrichtungen bereitzustellen, welche/s einen automatisierten und dadurch optimierten Herstellungsprozess ermöglicht.

Diese Aufgabe wird durch die Merkmalskombination gemäß Patentanspruch 1 gelöst.

Der Grundgedanke der vorliegenden Erfindung basiert darauf, dass die manuell durchgeführten Herstellungsschritte mittels einer Spreizvorrichtung und eine Spreiz- und Klemmvorrichtung ausgeführt werden. Hierfür wird ein, vorzugsweise endloser, Folienschlauch in der Spreiz- und Klemmvorrichtung angeordnet und an dieser zur Erzeugung von Faltungen einer teleskopartigen Steckfaltung mittels der Spreizvorrichtung umgeschlagen bzw. umgestülpt, bis eine vorbestimmte Anzahl von Faltungen der teleskopartigen Steckfaltung hergestellt wurde. Auf diese Weise ist eine automatisierte Herstellung umgesetzt. Dadurch ist die Effizienz bei der Herstellung und die Qualität der herzustellenden Folienschlauchabdeckung erheblich gesteigert. Auf diese Weise ist zunächst der Zeit- und Arbeitsaufwand im Vergleich zu einer manuellen Herstellung erheblich minimiert. Außerdem ist die Qualität der Abdeckungen konstant, da die Vorrichtung präzise Faltungen, Schnitte und Anpassungen gewährleistet und dadurch Fehler, wie ungenaue Längen oder fehlerhafte Faltungen, praktisch eliminiert. Auch große Produktionsmengen lassen sich problemlos realisieren, da die Automatisierung eine hohe Reproduzierbarkeit sicherstellt und ohne Abweichungen konsistente Ergebnisse liefert. Ein weiterer Vorteil ist eine verbesserte Hygiene, da der direkte Kontakt durch den Menschen mit den Materialien minimiert wird und dadurch das Risiko von Verunreinigungen sinkt.

Erfindungsgemäß wird eine Vorrichtung zur Herstellung einer Folienschlauchabdeckung für medizinische Vorrichtungen, mit einem durch eine teleskopartige Steckfaltung in seiner Länge verkürzten und bei bestimmungsgemäßen Gebrauch ausziehbaren Folienschlauch vorgeschlagen, umfassend eine Spreizvorrichtung zum Spreizen zumindest eines Endabschnitts eines Folienschlauchs in einer Querrichtung der Vorrichtung. Dabei ist die Spreizvorrichtung an einem Linearantrieb zur Bewegung der Spreizvorrichtung entlang einer Längsrichtung der Vorrichtung angeordnet. Die Vorrichtung umfasst außerdem eine Spreiz- und Klemmvorrichtung zum Spreizen und Klemmen des Folienschlauchs in einer zur Längsrichtung, und vorzugsweise zur Querrichtung, orthogonalen Richtung. Des Weiteren ist ein jeweiliger vorbestimmter Abschnitt des Folienschlauchs mittels der Spreizvorrichtung an der Spreiz- und Klemmvorrichtung durch eine Bewegung der Spreizvorrichtung mittels des Linearantriebs umschlagbar. Ferner ist der umgeschlagene vorbestimmte Abschnitt mittels der Spreiz- und Klemmvorrichtung spreizbar, derart, dass eine Faltung der teleskopartigen Steckfaltung des Folienschlauchs ausbildbar ist. Insbesondere ist der Folienschlauch in Längsrichtung in die Vorrichtung einführbar und/oder einziehbar, vorzugsweise über die Spreiz- und Klemmvorrichtung.

In einem vorteilhaften Ausführungsbeispiel ist vorgesehen, dass die Spreizvorrichtung zwei Spreizarme aufweist. Dabei sind die Spreizarme zwischen einer Einführungsposition zum Einführen in den Folienschlauch, einer Ausfahrposition zum Ausfahren aus dem Folienschlauch und Spreizposition zum Spreizen des Folienschlauchs positionierbar und/oder anordenbar. Vorzugsweise ist ein Abstand zwischen einem jeweiligen freien Ende der Spreizarme in der Einführungsposition kleiner als in der Ausfahrposition und ein Abstand zwischen einem jeweiligen freien Ende der Spreizarme in der Ausfahrposition kleiner ist als in der Spreizposition. Vorzugsweise kontaktieren sich die freien Enden in der Einführungsposition oder sind unmittelbar benachbart zueinander angeordnet, weiter vorzugsweise derart, dass die Spreizarme zu den freien Enden hin unter einem spitzen Winkel aufeinander zulaufen.

In einer vorteilhaften Ausführungsvariante ist vorgesehen, dass die Spreiz- und Klemmvorrichtung zwei, insbesondere plattenförmige und in Längsrichtung erstreckende, Klemmbacken aufweist. Die Klemmbacken sind zwischen einer geschlossenen Position, in welcher der Folienschlauch zwischen den Klemmbacken einklemmbar und/oder fixierbar und/oder um die Klemmbacken entgegen der Längsrichtung umschlagbar ist, einer geöffneten Position, in welcher der Folienschlauch zwischen den Klemmbacken positionierbar und/oder anordenbar und/oder aus der Klemmvorrichtung entnehmbar ist, und einer gespreizten Position in welcher der Folienschlauch spreizbar ist, positionierbar und/oder anordenbar. Darüber hinaus sind die Klemmbacken vorzugsweise mit einem Kantenschutz versehen, um Beschädigungen an dem Folienschlauch zu vermeiden und/oder zu reduzieren, insbesondere sind Kanten der Klemmbacken mit einem Radius versehen und/oder ist zumindest um die Kanten ein Schutzmaterial, insbesondere aus einem Kunststoff, angeordnet. Vorzugsweise sind die Klemmbacken mittels zwei Zylinder steuerbar und/oder positionierbar, insbesondere in die orthogonale Richtung, welche vorzugsweise eine Vertikalrichtung.

Ferner ist eine Ausführung günstig, bei welcher eine Bereitstellungsvorrichtung zum Bereitstellen des Folienschlauchs vorgesehen ist, insbesondere eine Handhabungseinrichtung und/oder eine Folienschlauchtrommel/rolle mit einem Endlosfolienschlauch.

Die erfindungsgemäße Vorrichtung ist in einer Ausführungsvariante ausgebildet, dass eine Trennvorrichtung, insbesondere eine Schneidvorrichtung und/oder eine Laservorrichtung, zum Abtrennen der hergestellten Folienschlauchabdeckung von dem Folienschlauch vorgesehen ist.

In einer weiteren vorteilhaften Ausführungsvariante ist eine Schweißvorrichtung zum Schweißen des Folienschlauchs vorgesehen, derart, dass ein geschlossenes freies Ende des Folienschlauchs ausbildbar ist. Auf diese Weise ist mit dem Schweißen ein Folienschlauch mit einem ersten, geschlossenen freien Ende und einem zweiten freien Ende mit einer Aufnahmeöffnung zur Aufnahme medizinischer Vorrichtungen ausbildbar.

In einem Ausführungsbeispiel der Erfindung ist, vorzugsweise in Längsrichtung gesehen, insbesondere unmittelbar, vor der Schweißvorrichtung und der Trennvorrichtung, eine Haltvorrichtung vorgesehen, insbesondere eine Vakuumhaltevorrichtung, zum Halten des Folienschlauchs in einer Bearbeitungsposition, insbesondere zum Aufnehmen der Spreizvorrichtung und/oder zum Schweißen des Folienschlauchs und/oder zum Trennen des Folienschlauchs. Dabei wird insbesondere unmittelbar vor, während und nach dem Schweißen der Folienschlauch von der Haltevorrichtung gehalten, bis die Spreizvorrichtung den Folienschlauch gespreizt hat. Ferner weist die Haltevorrichtung vorzugsweise auf zwei gegenüberliegenden Seiten des Folienschlauchs zumindest ein Halteelement auf, derart, dass der Folienschlauch in einer geöffneten Position haltbar und/oder fixierbar ist.

In einer weiteren vorteilhaften Variante ist eine, insbesondere optische, Sensorik zur Positionserfassung der Spreizvorrichtung und/oder der Spreiz- und Klemmvorrichtung und/oder des Folienschlauchs vorgesehen ist. Vorzugsweise ist die Sensorik auch zur Positionserfassung der Haltevorrichtung und/oder der Trennvorrichtung und/oder der Schweißvorrichtung und/oder des Linearantriebs vorgesehen.

Die erfindungsgemäße Vorrichtung ist in einer Ausführungsvariante ausgebildet, dass eine Abstreifvorrichtung, insbesondere ein ausfahrbarer und/oder einfahrbarer Teleskopstab, zum Abstreifen der Folienschlauchabdeckung von der Spreizvorrichtung bei einer Bewegung der Spreizvorrichtung entlang der Längsrichtung mittels des Linearantriebs vorgesehen. Vorzugsweise fällt die Folienschlauchabdeckung nach dem Abstreifen in eine Auffangwanne. Die Abstreifvorrichtung ist hierzu vor dem Vorbeifahren der Spreizvorrichtung und/oder der Folienschlauchabdeckung ausfahrbar, insbesondere derart, dass zumindest ein Endabschnitt der Abstreifvorrichtung zwischen den Spreizarmen der Spreizvorrichtung angeordnet ist.

In einem Ausführungsbeispiel der Erfindung ist eine Umhausung und/oder eine Umzäunung mit einer Sicherheitstür vorgesehen. Dabei erfolgt insbesondere beim Öffnen und/oder bei einer geöffneten Sicherheitstür ein Stopp bzw. Programmstopp der Vorrichtung.

In einer weiteren Ausführungsform der Erfindung ist ein Steuergerät zum Steuern und/oder Regeln der Vorrichtung, insbesondere der Spreizvorrichtung und/oder der Spreiz- und Klemmvorrichtung und/oder der Bereitstellungsvorrichtung und/oder der Trennvorrichtung und/oder der Schweißvorrichtung und/oder der Haltvorrichtung und/oder der Abstreifvorrichtung, vorgesehen, vorzugsweise auch anhand der von der Sensorik ermittelten Positionsdaten. Dabei ist insbesondere eine Dimension der teleskopartigen Steckfaltung des Folienschlauchs mittels des Steuergeräts einstellbar, weiter insbesondere eine Anzahl von Faltungen der teleskopartigen Steckfaltung des Folienschlauchs und/oder eine Länge des vorbestimmten Abschnitts des Folienschlauchs. Des Weiteren weist das Steuergerät vorzugweise eine Schnittstelle, insbesondere eine Mensch-Maschine-Schnittstelle (HMI), zur Einstellung und/oder Bestimmung und/oder Definition der Anzahl von Faltungen und/oder der Länge des vorbestimmten Abschnitts auf. Auf diese Weise ist eine Gesamtlänge der Folienschlauchabdeckung und/oder des vorbestimmten Abschnitts und/oder eine Anzahl von Faltungen der teleskopartigen Steckfaltung der Folienschlauchabdeckung mittels der Schnittstelle für einen Anwender einstellbar und/oder programmierbar. Ferner ermöglicht vorzugsweise eine integrierte Prozessüberwachung des Steuergeräts eine kontinuierliche Kontrolle und Anpassung der Vorrichtung sowie der Herzustellenden Folienschlauchabdeckung.

Erfindungsgemäß wird ferner ein Herstellungsverfahren einer Folienschlauchabdeckung für medizinische Vorrichtungen, mit einem durch eine teleskopartige Steckfaltung in seiner Länge verkürzten und bei bestimmungsgemäßen Gebrauch ausziehbaren Folienschlauch, mit einer Vorrichtung gemäß der vorstehenden Offenbarung vorgeschlagen, bei welchem ein Bereitstellen des Folienschlauchs (Schritt a), ein Einführen der Spreizvorrichtung in den Endabschnitt des Folienschlauchs mittels des Linearantriebs (Schritt b), insbesondere um eine Länge des vorbestimmten Abschnitts, und ein Spreizen des Folienschlauchs mittels der Spreizvorrichtung (Schritt c) erfolgt. Des Weiteren erfolgt ein Positionieren und/oder Bewegen des Folienschlauchs in Längsrichtung (Schritt d), wobei der Folienschlauch in einem gespreizten Zustand mittels der Spreizvorrichtung durch Bewegen der Spreizvorrichtung mittels des Linearantriebs bewegt und/oder positioniert wird. Dabei wird die Spreizvorrichtung mittels des Linearantriebs derart bewegt, dass der Folienschlauch, insbesondere mit einer doppelten Länge des vorbestimmten Abschnitts, von der Spreiz- und Klemmvorrichtung hervorsteht. Außerdem erfolgt ein Klemmen des Folienschlauchs mittels der Spreiz- und Klemmvorrichtung (Schritt e), ein Positionieren und/oder Bewegen des Folienschlauchs entgegen der Längsrichtung mittels der Spreizvorrichtung durch Bewegen der Spreizvorrichtung mittels des Linearantriebs (Schritt f), bis der Endabschnitt des Folienschlauchs um die Spreiz- und Klemmvorrichtung angeordnet ist, wobei der vorbestimmte Abschnitt um die Spreiz- und Klemmvorrichtung umgeschlagen wird. Darüber hinaus erfolgt ein Spreizen des umgeschlagenen vorbestimmten Abschnitts mittels der Spreiz- und Klemmvorrichtung (Schritt g), derart, dass eine Faltung der teleskopartigen Steckfaltung des Folienschlauchs ausgebildet wird.

In einer vorteilhaften Ausführungsvariante ist vorgesehen, dass die Spreizvorrichtung nach dem Spreizen durch die Spreiz- und Klemmvorrichtung mittels des Linearantriebs aus dem Folienschlauch ausgefahren wird. Nach dem Ausfahren wird die Spreizvorrichtung mittels des Linearantriebs erneut in den Folienschlauch eingeführt, derart, dass die Spreizvorrichtung innerhalb der Faltung und/oder der Faltungen angeordnet ist, insbesondere um eine Länge des vorbestimmten Abschnitts. Ferner wird der Folienschlauch nach dem Einführen mittels der Spreizvorrichtung gespreizt und dabei ein Spreizen der Spreiz- und Klemmvorrichtung reduziert, derart, dass der Folienschlauch von der Spreiz- und Klemmvorrichtung entnehmbar ist. Anschließend werden die Schritte d) bis g) wiederholt. Vorzugsweise werden sämtliche Schritte der vorstehenden Ausführungsvariante des Verfahrens wiederholt, bis eine vorbestimmte Anzahl von Faltungen erreicht und die teleskopartige Steckfaltung des Folienschlauchs ausgebildet ist. Dabei ist insbesondere eine Dimension der teleskopartigen Steckfaltung des Folienschlauchs mittels des Steuergeräts einstellbar, insbesondere eine Anzahl von Faltungen der teleskopartigen Steckfaltung des Folienschlauchs und/oder eine Länge des vorbestimmten Abschnitts des Folienschlauchs.

In einem Ausführungsbeispiel des Verfahrens ist vorgesehen, dass anschließend an das Herstellen der teleskopartigen Steckfaltung der Folienschlauch mittels der Spreizvorrichtung in der Schweißvorrichtung positioniert und mittels der Schweißvorrichtung geschweißt wird, derart, dass ein geschlossenes freies Ende des Folienschlauchs ausgebildet wird.

Ferner ist eine Ausführung günstig, bei welcher bei oder nach dem Schwei-ßen der Folienschlauch mittels der Trennvorrichtung getrennt wird, insbesondere entgegen der Längsrichtung gesehen in einem Bereich, vorzugsweise unmittelbar, hinter dem geschlossenen freien Ende.

In einer weiteren vorteilhaften Variante ist erfindungsgemäß vorgesehen, dass beim Schweißen und/oder Trennen ein sich an den zu schweißenden und/oder zu trennen den Abschnitt anschließender Abschnitt mittels der Haltevorrichtung gehalten wird, insbesondere derart, dass nach dem Trennen unmittelbar ein weiterer Folienschlauch und/oder ein weiterer Teil des bereitgestellten Folienschlauchs zur Durchführung des Verfahrens bereitgestellt und von der Haltevorrichtung gehalten wird.

Vorzugsweise wird der Folienschlauch auch beim Bereitstellen von der Haltevorrichtung gehalten.

In einer bevorzugten Ausführungsform des Verfahrens wird die Spreizvorrichtung vor dem Ausfahren in die Ausfahrposition und/oder vor dem Einführen in die Einführposition und/oder beim Spreizen in die Spreizposition bewegt.

In einer weiteren Ausführungsvariante ist vorgesehen, dass die Spreiz- und Klemmvorrichtung beim Klemmen in die geschlossene Position und/oder beim Spreizen in die gespreizte Position und/oder beim Spreizen mittels der Spreizvorrichtung in die/der geöffnete/n Position bewegt wird und/oder angeordnet ist.

Des Weiteren ist eine Ausführung vorteilhaft, bei welcher beim Bereitstellen der Folienschlauch entlang seiner Längserstreckung zwischen den Klemmbacken angeordnet wird, insbesondere derart, dass der Folienschlauch in Längsrichtung von den Klemmbacken hervorsteht, vorzugsweise um eine Länge des vorbestimmten Abschnitts.

In einem vorteilhaften Ausführungsbeispiel des Verfahrens ist vorgesehen, dass der Folienschlauch nach dem Bereitstellen mittels der Haltvorrichtung in der Bearbeitungsposition gehalten wird, vorzugsweise bis zu und/oder unmittelbar nach dem Spreizen mittels der Spreizvorrichtung.

Die mit dem vorstehenden Verfahren hergestellte Folienschlauchabdeckung weist eine sterile und eine nicht sterile Seite auf. Anschließend erfolgt in einer Ausführungsvariante nach einem Ausgeben der Folienschlauchabdeckung aus der Vorrichtung ein Aufbringen eines Klebstoffs und/oder Klebestreifens mittels einer Klebstoffauftragsvorrichtung und/oder eines Klebstoffapplikators zum Auftragen eines Klebstoffs und/oder eines Klebestreifens, insbesondere eines/r doppelseitige Klebestreifens und/oder Klebefolie, zur Fixierung der medizinischen Vorrichtung an dem Folienschlauch im Bereich des ersten, geschlossenes freien Endes auf der nicht sterilen Seite eine.

Darüber hinaus ist eine Variante vorteilhaft, bei welcher nach dem Ausgeben aus der Vorrichtung ein Aufbringen und/oder Anordnen eine Markierung zur Kennzeichnung der Aufnahmeöffnung zur Aufnahme medizinischer Vorrichtungen erfolgt.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Seitenansicht einer Vorrichtung zur Herstellung einer Folienschlauchabdeckung für medizinische Vorrichtungen; und
- Fig. 2: eine Draufsicht der Vorrichtung zur Herstellung einer Folienschlauchabdeckung für medizinische Vorrichtungen.

Die Figuren sind beispielhaft schematisch. Gleiche Bezugszeichen in den Figuren weisen auf gleiche funktionale und/oder strukturelle Merkmale hin.

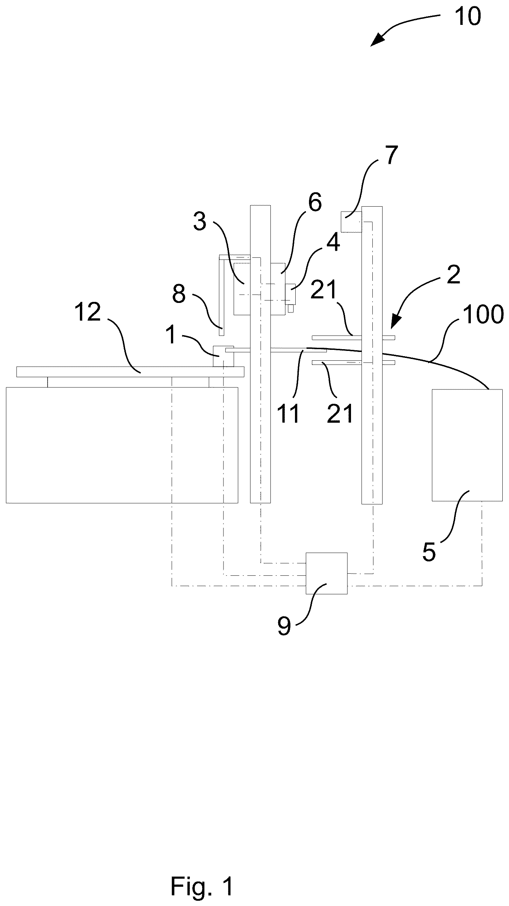

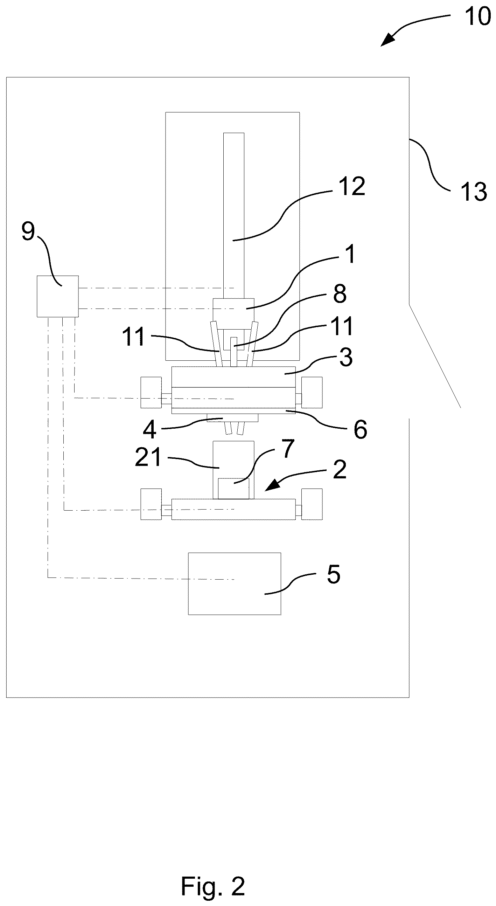

In Figur 1 ist eine Seitenansicht einer Vorrichtung 10 zur Herstellung einer Folienschlauchabdeckung für medizinische Vorrichtungen dargestellt und Figur 2 zeigt eine Draufsicht der Vorrichtung 10 zur Herstellung einer Folienschlauchabdeckung für medizinische Vorrichtungen.

Die Vorrichtung 10 zur Herstellung der Folienschlauchabdeckung für medizinische Vorrichtungen, mit einem durch eine teleskopartige Steckfaltung in seiner Länge verkürzten und bei bestimmungsgemäßen Gebrauch ausziehbaren Folienschlauch, umfasst eine Spreizvorrichtung 1 zum Spreizen zumindest eines Endabschnitts eines Folienschlauchs 100 in einer Querrichtung der Vorrichtung 10. Dabei ist die Spreizvorrichtung 1 an einem Linearantrieb 12 zur Bewegung der Spreizvorrichtung 1 entlang einer Längsrichtung der Vorrichtung 10 angeordnet. Darüber hinaus weist die Vorrichtung 10 eine Spreiz- und Klemmvorrichtung 2 zum Spreizen und Klemmen des Folienschlauchs 100 in einer zur Längsrichtung, und vorzugsweise zur Querrichtung, orthogonalen Richtung, auf. Des Weiteren ist ein jeweiliger vorbestimmter Abschnitt des Folienschlauchs 100 mittels der Spreizvorrichtung 1 an der Spreiz- und Klemmvorrichtung 2 durch eine Bewegung der Spreizvorrichtung 1 mittels des Linearantriebs 12 umschlagbar. Ferner ist der umgeschlagene vorbestimmte Abschnitt mittels der Spreiz- und Klemmvorrichtung 2 derart spreizbar, dass eine Faltung der teleskopartigen Steckfaltung des Folienschlauchs 100 ausbildbar ist.

Die Spreizvorrichtung 1 weist zwei Spreizarme 11 auf. Die Spreizarme 11 sind zwischen einer Einführungsposition zum Einführen in den Folienschlauch 100, einer Ausfahrposition zum Ausfahren aus dem Folienschlauch 100 und Spreizposition zum Spreizen des Folienschlauchs 100 positionierbar und/oder anordenbar ist. Dabei ist ein ein Abstand zwischen einem jeweiligen freien Ende der Spreizarme 11 in der Einführungsposition kleiner als in der Ausfahrposition und ein Abstand zwischen einem jeweiligen freien Ende der Spreizarme 11 in der Ausfahrposition kleiner als in der Spreizposition. In der Einführungsposition kontaktieren sich die freien Enden der Spreizarme 11 oder sind unmittelbar benachbart zueinander angeordnet, weiter vorzugsweise derart, dass die Spreizarme 11 zu den freien Enden hin unter einem spitzen Winkel zulaufen.

Die Spreiz- und Klemmvorrichtung 2 weist zwei plattenförmige und sich in Längsrichtung erstreckende Klemmbacken 21 auf, welche zwischen einer geschlossenen Position, in welcher der Folienschlauch 100 zwischen den Klemmbacken 21 einklemmbar und/oder fixierbar und/oder um die Klemmbacken 21 entgegen der Längsrichtung umschlagbar ist, einer geöffneten Position, in welcher der Folienschlauch 100 zwischen den Klemmbacken 21 positionierbar und/oder anordenbar und/oder aus der Klemmvorrichtung entnehmbar ist, und einer gespreizten Position in welcher der Folienschlauch 100 spreizbar ist, positionierbar und/oder anordenbar sind. Des Weiteren weisen die Klemmbacken 21 einen Kantenschutz auf. Insbesondere sind die Kanten der Klemmbacken 21 mit einem Radius versehen oder zumindest um die Kanten ist ein Schutzmaterial aus Kunststoff angeordnet ist.

Darüber hinaus ist eine Bereitstellungsvorrichtung 5 zum Bereitstellen des Folienschlauchs 100 vorgesehen, insbesondere eine Handhabungseinrichtung und/oder eine Folienschlauchtrommel mit einem Endlosfolienschlauch.

Die Vorrichtung 10 weist ferner eine Trennvorrichtung 6, insbesondere eine Schneidvorrichtung und/oder eine Laservorrichtung, zum Abtrennen der hergestellten Folienschlauchabdeckung von dem Folienschlauch 100 und eine Schweißvorrichtung 3 zum Schweißen des Folienschlauchs, derart, dass ein geschlossenes freies Ende des Folienschlauchs (100) ausbildbar ist, auf.

Außerdem ist, vorzugsweise in Längsrichtung gesehen unmittelbar vor der Schweißvorrichtung und der Trennvorrichtung, eine Haltvorrichtung 4 ausgebildet als Vakuumhaltevorrichtung zum Halten des Folienschlauchs in einer Bearbeitungsposition zum Aufnehmen der Spreizvorrichtung und/oder zum Schweißen des Folienschlauchs und/oder zum Trennen des Folienschlauchs vorgesehen.

Die Vorrichtung 10 umfasst ferner eine optische Sensorik 7 zur Positionserfassung der Spreizvorrichtung 1 und/oder der Spreiz- und Klemmvorrichtung 2 und/oder des Folienschlauchs 100 sowie eine Abstreifvorrichtung 8 zum Abstreifen der Folienschlauchabdeckung 100 von der Spreizvorrichtung 1 bei einer Bewegung der Spreizvorrichtung 1 entlang einer Längsrichtung mittels des Linearantriebs 12, welches als ein ausfahrbarer und/oder einfahrbarer Teleskopstab ausgebildet ist. Unterhalb der Abstreifvorrichtung ist eine Auffangwanne zum Auffangen der hergestellten Folienschlauchabdeckung angeordnet.

Darüber hinaus weist die Vorrichtung 10 eine Umhausung 13 mit einer Sicherheitstür für einen Programmstopp auf.

Ferner ist ein Steuergerät 9 zum Steuern und/oder Regeln der Vorrichtung 10, und zwar der Spreizvorrichtung 1 und der Spreiz- und Klemmvorrichtung 2 und der Bereitstellungsvorrichtung 5 und der Trennvorrichtung 6 und der Schweißvorrichtung 3 und der Haltvorrichtung 4 und der Abstreifvorrichtung 8, vorgesehen. Dabei wird die Vorrichtung 10 auch anhand der von der Sensorik 7 ermittelten Positionsdaten gesteuert und/oder geregelt. Auf diese Weise ist eine Dimension der teleskopartigen Steckfaltung des Folienschlauchs 100 mittels des Steuergeräts 9 einstellbar, insbesondere eine Anzahl von Faltungen der teleskopartigen Steckfaltung des Folienschlauchs 100 und/oder eine Länge des vorbestimmten Abschnitts des Folienschlauchs 100. Des Weiteren weist das Steuergerät 9 eine Mensch-Maschine-Schnittstelle (HMI) zur Einstellung und/oder Bestimmung und/oder Definition der Anzahl von Faltungen und/oder der Länge des vorbestimmten Abschnitts auf.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Vorrichtung (10) zur Herstellung einer Folienschlauchabdeckung für medizinische Vorrichtungen, mit einem durch eine teleskopartige Steckfaltung in seiner Länge verkürzten und bei bestimmungsgemäßen Gebrauch ausziehbaren Folienschlauch, umfassend
eine Spreizvorrichtung (1) zum Spreizen zumindest eines Endabschnitts eines Folienschlauchs (100) in einer Querrichtung der Vorrichtung (10), wobei die Spreizvorrichtung (1) an einem Linearantrieb (12) zur Bewegung der Spreizvorrichtung (1) entlang einer Längsrichtung der Vorrichtung (10) angeordnet ist, und
eine Spreiz- und Klemmvorrichtung (2) zum Spreizen und Klemmen des Folienschlauchs (100) in einer zur Längsrichtung, und vorzugsweise zur Querrichtung, orthogonalen Richtung,
wobei ein jeweiliger vorbestimmter Abschnitt des Folienschlauchs (100) mittels der Spreizvorrichtung (1) an der Spreiz- und Klemmvorrichtung (2) durch eine Bewegung der Spreizvorrichtung (1) mittels des Linearantriebs (12) umschlagbar ist, wobei der umgeschlagene vorbestimmte Abschnitt mittels der Spreiz- und Klemmvorrichtung (2) spreizbar ist, derart, dass eine Faltung der teleskopartigen Steckfaltung des Folienschlauchs (100) ausbildbar ist.

2. Vorrichtung (10) gemäß Anspruch 1, wobei die Spreizvorrichtung (1) zwei Spreizarme (11) aufweist, wobei die Spreizarme (11) zwischen einer Einführungsposition zum Einführen in den Folienschlauch (100), einer Ausfahrposition zum Ausfahren aus dem Folienschlauch (100) und Spreizposition zum Spreizen des Folienschlauchs (100) positionierbar und/oder anordenbar ist.

3. Vorrichtung gemäß Anspruch 1 oder 2, wobei die Spreiz- und Klemmvorrichtung (2) zwei, insbesondere plattenförmige und in Längsrichtung erstreckende, Klemmbacken (21) aufweist, wobei die Klemmbacken (21) zwischen einer geschlossenen Position, in welcher der Folienschlauch (100) zwischen den Klemmbacken (21) einklemmbar und/oder fixierbar und/oder um die Klemmbacken (21) entgegen der Längsrichtung umschlagbar ist, einer geöffneten Position, in welcher der Folienschlauch (100) zwischen den Klemmbacken (21) positionierbar und/oder anordenbar und/oder aus der Klemmvorrichtung entnehmbar ist, und einer gespreizten Position in welcher der Folienschlauch (100) spreizbar ist, positionierbar und/oder anordenbar sind.

4. Vorrichtung (10) gemäß einem der Ansprüche 1 bis 3, wobei eine Bereitstellungsvorrichtung (5) zum Bereitstellen des Folienschlauchs (100) vorgesehen ist, insbesondere eine Handhabungseinrichtung und/oder eine Folienschlauchtrommel/rolle mit einem Endlosfolienschlauch.

5. Vorrichtung (10) gemäß einem der vorhergehenden Ansprüche, wobei eine Trennvorrichtung (6), insbesondere eine Schneidvorrichtung und/oder eine Laservorrichtung, zum Abtrennen der hergestellten Folienschlauchabdeckung von dem Folienschlauch (100) vorgesehen ist.

6. Vorrichtung (10) gemäß einem der vorhergehenden Ansprüche, wobei eine Schweißvorrichtung (3) zum Schweißen des Folienschlauchs vorgesehen ist, derart, dass ein geschlossenes freies Ende des Folienschlauchs (100) ausbildbar ist.

7. Vorrichtung (10) gemäß einem der vorhergehenden Ansprüche, wobei, vorzugsweise in Längsrichtung gesehen, insbesondere unmittelbar, vor der Schweißvorrichtung und der Trennvorrichtung, eine Haltvorrichtung (4) vorgesehen ist, insbesondere eine Vakuumhaltevorrichtung, zum Halten des Folienschlauchs in einer Bearbeitungsposition, insbesondere zum Aufnehmen der Spreizvorrichtung und/oder zum Schweißen des Folienschlauchs und/oder zum Trennen des Folienschlauchs.

8. Vorrichtung (10) gemäß einem der vorhergehenden Ansprüche, wobei eine, insbesondere optische, Sensorik (7) zur Positionserfassung der Spreizvorrichtung (1) und/oder der Spreiz- und Klemmvorrichtung (2) und/oder des Folienschlauchs (101) vorgesehen ist.

9. Vorrichtung (10) gemäß einem der vorhergehenden Ansprüchen, wobei eine Abstreifvorrichtung (8), insbesondere ein ausfahrbarer und/oder einfahrbarer Teleskopstab, zum Abstreifen der Folienschlauchabdeckung (100) von der Spreizvorrichtung (1) bei einer Bewegung der Spreizvorrichtung (1) entlang einer Längsrichtung mittels des Linearantriebs (12) vorgesehen ist.

10. Vorrichtung (10) gemäß einem der vorhergehenden Ansprüchen, wobei ein Steuergerät (9) zum Steuern und/oder Regeln der Vorrichtung (10), insbesondere der Spreizvorrichtung (1) und/oder der Spreiz- und Klemmvorrichtung (2) und/oder der Bereitstellungsvorrichtung (5) und/oder der Trennvorrichtung (6) und/oder der Schweißvorrichtung (3) und/oder der Haltvorrichtung (4) und/oder der Abstreifvorrichtung (8), vorgesehen ist, vorzugsweise auch anhand der von der Sensorik (7) ermittelten Positionsdaten.

11. Herstellungsverfahren einer Folienschlauchabdeckung für medizinische Vorrichtungen, mit einem durch eine teleskopartige Steckfaltung in seiner Länge verkürzten und bei bestimmungsgemäßen Gebrauch ausziehbaren Folienschlauch (100), mit einer Vorrichtung gemäß einem der vorhergehenden Ansprüche, welches die Schritte umfasst:
a. Bereitstellen des Folienschlauchs (100);
b. Einführen der Spreizvorrichtung (1) in den Endabschnitt des Folienschlauchs (100) mittels des Linearantriebs (12), insbesondere um eine Länge des vorbestimmten Abschnitts;
c. Spreizen des Folienschlauchs mittels der Spreizvorrichtung (1);
d. Positionieren und/oder Bewegen des Folienschlauchs (100) in Längsrichtung, wobei der Folienschlauch (100) in einem gespreizten Zustand mittels der Spreizvorrichtung (1) durch Bewegen der Spreizvorrichtung (1) mittels des Linearantriebs (12) bewegt und/oder positioniert wird, wobei die Spreizvorrichtung (1) mittels des Linearantriebs (12) derart bewegt wird, dass der Folienschlauch (100), insbesondere mit einer doppelten Länge des vorbestimmten Abschnitts, von der Spreiz- und Klemmvorrichtung (2) hervorsteht;
e. Klemmen des Folienschlauchs (100) mittels der Spreiz- und Klemmvorrichtung (2);
f. Positionieren und/oder Bewegen des Folienschlauchs (100) entgegen der Längsrichtung mittels der Spreizvorrichtung (1) durch Bewegen der Spreizvorrichtung (1) mittels des Linearantriebs (12), bis der Endabschnitt des Folienschlauchs um die Spreiz- und Klemmvorrichtung (2) angeordnet ist, wobei der vorbestimmte Abschnitt um die Spreiz- und Klemmvorrichtung (2) umgeschlagen wird;
g. Spreizen des umgeschlagenen vorbestimmten Abschnitts mittels der Spreiz- und Klemmvorrichtung (2), derart, dass eine Faltung der teleskopartigen Steckfaltung des Folienschlauchs (100) ausgebildet wird.

12. Verfahren gemäß Anspruch 11, wobei die Spreizvorrichtung (1) nach dem Spreizen durch die Spreiz- und Klemmvorrichtung (2) mittels des Linearantriebs (12) aus dem Folienschlauch (100) ausgefahren wird, wobei die Spreizvorrichtung (1) nach dem Ausfahren mittels des Linearantriebs erneut in den Folienschlauch eingeführt wird, derart, dass die Spreizvorrichtung innerhalb der Faltung angeordnet ist, insbesondere um eine Länge des vorbestimmten Abschnitts, wobei nach dem Einführen der Folienschlauch mittels der Spreizvorrichtung (1) gespreizt wird und dabei ein Spreizen der Spreiz- und Klemmvorrichtung (2) reduziert wird, derart, dass der Folienschlauch (100) von der Spreiz- und Klemmvorrichtung (2) entnehmbar ist, wobei anschließend die Schritte d) bis g) wiederholt werden.

13. Verfahren gemäß Anspruch 12, wobei anschließend der Folienschlauch mittels der Spreizvorrichtung (1) in der Schweißvorrichtung positioniert und mittels der Schweißvorrichtung geschweißt wird, derart, dass ein geschlossenes freies Ende des Folienschlauchs (100) ausgebildet wird.

14. Verfahren gemäß Anspruch 13, wobei beim oder nach dem Schweißen der Folienschlauch mittels der Trennvorrichtung getrennt wird, insbesondere entgegen der Längsrichtung gesehen in einem Bereich, vorzugsweise unmittelbar, hinter dem geschlossenen freien Ende.

15. Verfahren gemäß Anspruch 13 oder 14, wobei beim Schweißen und/oder Trennen ein sich an den zu schweißenden und/oder zu trennen den Abschnitt entgegen der Längsrichtung anschließender Abschnitt des Folienschlauchs (100) mittels der Haltevorrichtung (4) gehalten wird.
